# EUROPÄISCHE PATENTSCHRIFT

(11) **EP 0 967 539 B1**
(45) Veröffentlichungstag und Bekanntmachung des Hinweises auf die Patenterteilung: **16.08.2001**
(21) Anmeldenummer: 99112018.9
(22) Anmeldetag: 22.06.1999
(51) Int. Cl.: G06F 1/32

(54) **Vorrichtung zur Senkung des Leistungsverbrauchs eines Signalprozessor-Systems**
Apparatus for reducing the power consumption of a signal-processor system
Dispositif pour réduire la consommation d'énergie d'un système de traitement de signaux

(30) Priorität: 25.06.1998 DE 19828316
(43) Veröffentlichungstag der Anmeldung: 29.12.1999
(73) Patentinhaber: Astrium GmbH, 81663 München (DE)
(72) Erfinder: Helfers, Tim, 81739 München (DE)
(74) Vertreter: Ulrich, Thomas

(56) Entgegenhaltungen:
- EP-A- 0 707 256
- US-A- 5 208 781

## Beschreibung

Die vorliegende Erfindung bezieht sich auf eine Vorrichtung zur Senkung des Leistungsverbrauchs eines Signalprozessor-Systems gemäß dem Oberbegriff des Patentanspruchs 1.

In herkömmlichen Rechnern stellt der Programmspeicher eines Signalprozessors eine starke Leistungssenke dar, da er selbst im Ruhezustand des Rechners ständig aktiviert ist. Eine starke Wärmeentwicklung dieser Speicher ist die Folge.

Herkömmlich erfolgt diese Wärmeabführung beispielsweise durch Kühlkörper oder anderweitige Kühlvorrichtungen. Jedoch hat eine derartige Ausbildung von Vorrichtungen zur Wärmeabführung eine Gewichtserhöhung zur Folge, die sich insbesondere bei einer Anwendung des Signalprozessors auf dem Gebiet der Raumfahrt nachteilig auswirkt.

Daher ist es Aufgabe der vorliegenden Erfindung, eine Vorrichtung zur Senkung des Leistungsverbrauchs des Programmspeichers für Signalprozessoren zu schaffen, durch die die Wärmeabgabe des Programmspeichers reduziert wird, so daß eine Vorrichtung zur Wärmeabführung und somit Gewicht eingespart werden kann, und durch die zudem der Gesamtstromverbrauch gesenkt werden kann. Desweiteren darf die Vorrichtung den Zugriff des Signalprozessors auf den Programmspeicher in keiner Weise einschränken, um die sichere Programmabarbeitung und die maximale Rechenleistung nicht zu gefährden.

Erfindungsgemäß wird diese Aufgabe durch die Merkmale des kennzeichnenden Teils des Patentanspruchs 1 gelöst. Weitere vorteilhafte Ausgestaltungen sind in den Unteransprüchen angegeben.

Durch die erfindungsgemäße Anordnung wird der Stromverbrauch und damit auch die Wärmeabgabe des Programmspeichers reduziert, so daß eine Vorrichtung zur Wärmeabführung und somit Gewicht eingespart wird.

Weitere Aufgaben, Merkmale und Vorteile der Erfindung werden aus der nachfolgenden Beschreibung eines bevorzugten Ausführungsbeispiels der Erfindung in Verbindung mit der Zeichnung offensichtlich.

Es zeigt:
Fig. 1 den Blockschaltbild eines erfindungsgemäßen Systemaufbaus
Fig. 2 ein Schaltbild der erfindungsgemäßen Zusatzlogik zur Erkennung des Idle-Modes und

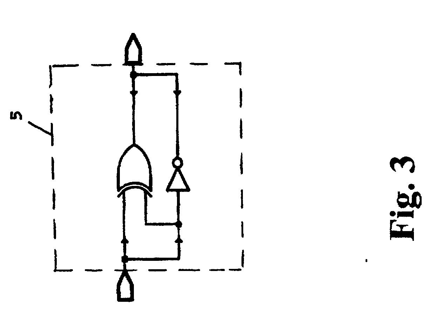

Fig. 3 ein Schaltbild einer in der erfindungsgemäßen Zusatzlogik verwendeten Zählschaltung.

Insbesondere in der Raumfahrt spielt das Gewicht verwendeter Rechnerkomponenten eine besonders große Rolle. Aus diesem Grund besteht bei herkömmlichen Programmspeichern für Signalprozessoren mit sehr hoher Stromaufnahme , die eine Vorrichtung zur Wärmeabführung benötigen, das Problem der sich durch diese Vorrichtung zur Wärmeabführung ergebenden Gewichtserhöhung im Vergleich zu einem Signalprozessor ohne eine Vorrichtung zur Wärmeabführung. Zudem ist die Stromversorgung in der Raumfahrt sehr begrenzt, so daß die Leistungsaufnahme des Rechnersystems eingeschränkt werden muß.

Als Signalprozessoren in der Raumfahrt werden vorzugsweise der strahlungstolerante Signalprozessor TSC21020 von Temic/MHS oder der funktional identische Signalprozessor ADSP21020 von Analog Devices verwendet, da sie durch ihre hohe Rechenleistung den neuen Anforderungen in der Raumfahrt Rechnung tragen.

Herkömmlich wird auf die nachfolgend beschriebene Weise versucht, die Stromaufnahme von Rechnersystemen mit Signalprozessoren zu verringern. Während der Signalprozessor keine Daten zu verarbeiten hat, geht er in den sogenannten Idle-Mode. Dieser stoppt jegliche internen Operationen, so daß der Signalprozessor nur geringe Leistung verbraucht.

Der externe Programmspeicher jedoch verbleibt im aktiven Zustand, um für das Lesen der nächsten Instruktion keine Zeit zu verlieren, d.h. dieser Programmspeicher nimmt dauerhaft Leistung auf. Durch diese dauerhafte Leistungsaufnahme des Programmspeichers kann jedoch der durchschnittliche Leistungsverbrauch des Rechners durch den Ruhezustand des Signalprozessors nicht wesentlich gesenkt werden.

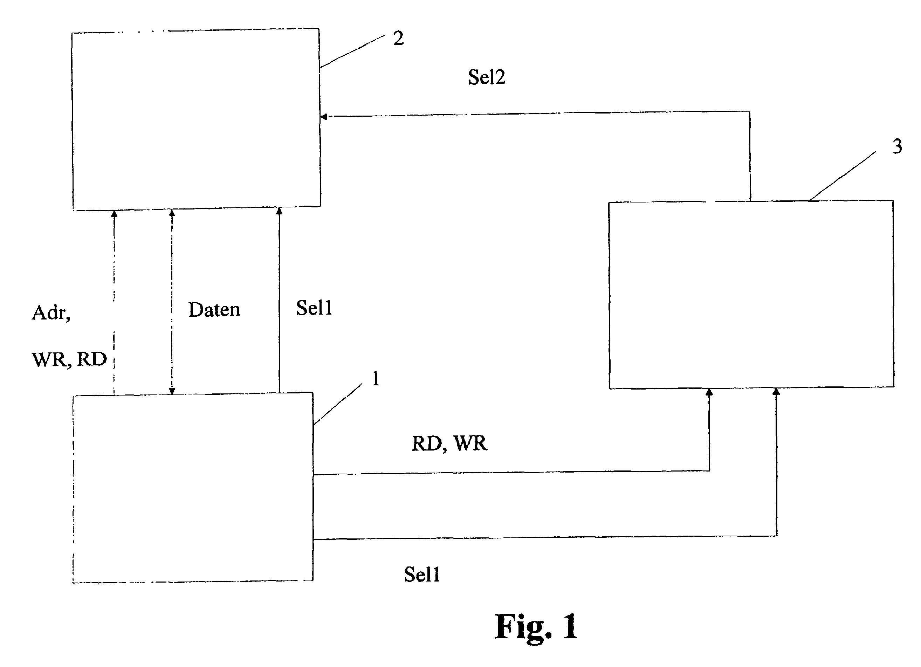

Dieses Problem wird nun aber durch die erfindungsgemäße Anordnung gelöst, die in Fig. 1 gezeigt ist. Das System umfaßt einen Signalprozessor 1, einen Programmspeicher 2 und eine Zusatzlogik 3. Der Signalprozessor 1 gibt zum Programmspeicher 2 Adressen Adr, Schreib-Signale WR und Lese-Signale RD sowie ein Auswahl- bzw. Selectsignal Sel1 aus. Gleichzeitig mit dieser Ausgabe der Signale Adr, WR, RD und Sel1 gibt der Signalprozessor 1 die Schreib-Signale WR, die Lese-Signale RD und das Auswahlsignal Sel1 auch an die Zusatzlogik 3 aus. Die Zusatzlogik 3 analysiert die Steuersignale, erkennt das Vorhanden-bzw. Nichtvorhandensein des Idle-Modes und deaktiviert bzw. aktiviert den Programmspeicher 2 entsprechend dem Vorhanden- bzw. Nichtvorhandensein des Idle-Modes über eine separate Auswahl- bzw. Select-Leitung Sel2.

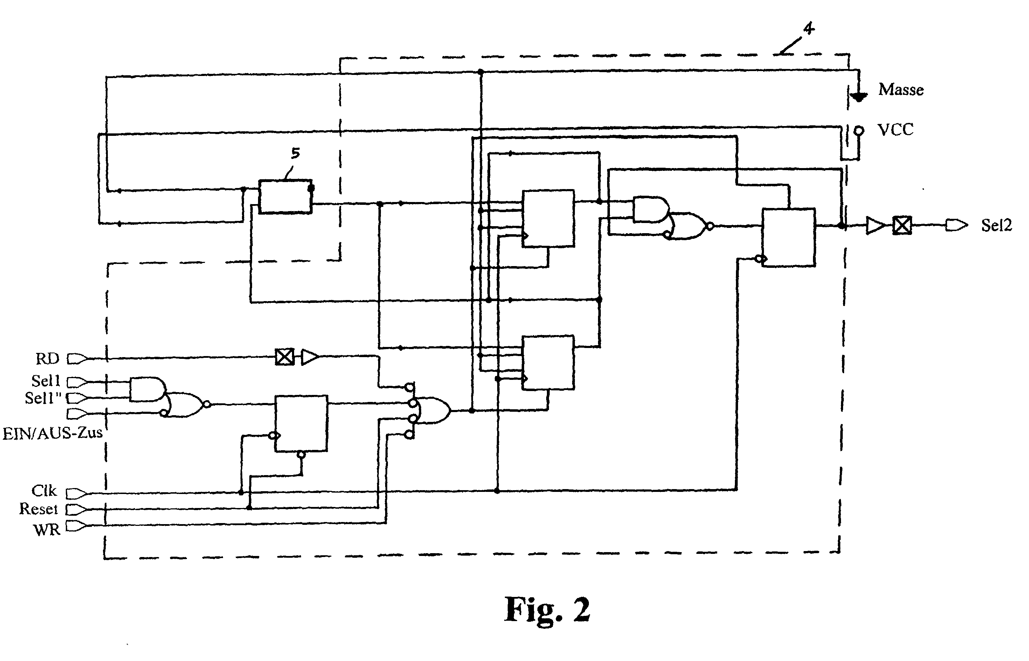

Der genaue Schaltungsaufbau der erfindungsgemäßen Zusatzlogik 3 ist in Fig. 2 dargestellt. Dabei besteht die Zusatzlogik 3 im wesentlichen aus zwei Elementen, nämlich eine Einrichtung 4 zur Erkennung des Idle-Modes aus einem bestimmten Zustand der Eingangssignale und einer Zähleinrichtung 5, mittels derer sichergestellt wird, daß die entsprechenden Signale über eine bestimmte Zeit stabil sind, so daß eine fehlerhafte Erkennung des Idle-Modes ausgeschlossen werden kann. Eingangssignale der Zusatzlogik sind das Lese-Signal RD, das Schreib-Signal WR, das Auswahlsignal Sell vom Signalprozessor, ein Auswahlsignal Sel1", das eine optionale zweite Programmspeicherbank selektiert, ein Ein/Aus-Signal der Zusatzlogik EIN/AUS_Zus, ein Taktsignal Clk und ein Rücksetzsignal Reset. Das Ausgangssignal der Zusatzlogik 3 ist das Auswahlsignal Sel2, das zum Programmspeicher 2 ausgegeben wird und den Programmspeicher 2 deaktiviert bzw. aktiviert, je nach Vorhandensein- bzw. Nichtvorhandensein des Idle-Modes.

Die Einrichtung 4 zur Erkennung des Idle-Modes und zum Aktivieren bzw. Deaktivieren des Programmspeichers 2 arbeitet folgendermaßen:
Die Einrichtung 4 besteht aus einer Logik, die die Eingangssignale RD, WR, Sel1, Sel1" auswertet und einer unabhängigen Zählschaltung 5 zuführt. Liegt ein Taktsignal Clk und ein positives Rücksetzsignal Reset an, zählt die Zählschaltung aufwärts von 0 bis 3. Wenn die Eingangssignale während des gesamten Zählvorgangs stabil den Idle-Mode anzeigen (RD=1, WR=1, Sel1 oder Sel1"=0), wird der Programmspeicher 2 deaktiviert (Sel2=0). Sobald sich die Konstellation der Eingangssignale ändert, wird Sel2 sofort ohne Verzögerung des Taktsignals Clk auf 1 gesetzt und der Programmspeicher 2 wird wieder aktiviert. Somit wird der Signalprozessor bei dem Zugriff auf den Programmspeicher 2 nicht behindert, wenn er wieder "aufwacht".

Die Wartezyklen für den Zugriff auf diesen Programmspeicher 2 müssen dabei aber vor diesem Vorgang durch die Software erhöht werden, um der Zusatzlogik 3 die Zeit zu geben, den Programmspeicher 2 zu aktivieren. Danach können jedoch Wartezyklen wieder auf die für das System minimale Zahl heruntergesetzt werden.

Die Zusatzlogik kann über ein Signal "Ein/AUS-Zus" ein- bzw. ausgeschaltet werden.

Da alle raumfahrttauglichen Speicher einen zweiten Select-Eingang für das Signal Sel2 zur Verfügung stellen, hat der Signalprozessor (TSC21020) über Sel1 unbehinderten Zugriff auf den Programmspeicher, so daß die maximale Rechenleistung bei durchschnittlich geringerem Leistungsverbrauch erreicht werden kann. Zudem wird der Rechner um eine starke Hitzequelle, die der Programmspeicher bisher darstellte, vermindert, so daß eine Vorrichtung zur Wärmeabführung und somit Gewicht eingespart werden kann.

## Patentansprüche

1. Vorrichtung zur Senkung des Leistungsverbrauchs eines Signalprozessorsystems mit einem Signalprozessor (1) und einem Programmspeicher (2), der mit dem Signalprozessor (1) zur Zuführung von Steuersignalen (WR, RD, Sel 1) für den Zugriff auf den Programmspeicher (2) verbunden ist, wobei der Signalprozessor (1) eine Einrichtung zur Beendigung jeglicher interner Operationen und zum Übergang des Signalprozessors (1) in einen Idle-Mode, während dessen der Signalprozessor (1) keine Daten zu verarbeiten hat, umfaßt, gekennzeichnet durch eine mit dem Signalprozessor (1) und dem Programmspeicher (2) gekoppelte Zusatzlogik (3), welche die für den Zugriff auf den Programmspeicher (2) bestimmten Steuersignale (WR, RD, Sel 1) erfaßt und daraus den Idle-Mode des Signalprozessors (1) erkennt und den Programmspeicher (2) bei Erkennung des Idle-Modes deaktiviert und bei Verlassen des Idle-Modes wieder aktiviert.

2. Vorrichtung nach Anspruch 1, **dadurch gekennzeichnet, daß** eine weitere Einrichtung die Wartezyklen für den Zugriff auf den Programmspeicher (2) während des Idle-Mode erhöht.

3. Vorrichtung nach Anspruch 1 oder 2, **dadurch gekennzeichnet, daß** die Zusatzlogik (3) eine Zählschaltung (5) umfaßt, die, wenn die Signale (Sel1, RD, WR) des Signalprozessors, die einen Idle-Mode anzeigen, eine bestimmte festgelegte Zeit anliegen, ihren Zählwert um eins erhöht.

4. Vorrichtung nach einem der Ansprüche 1 bis 3, **dadurch gekennzeichnet, daß** die Zusatzlogik (3) außerdem eine Einrichtung (4) zur Erkennung des Idle-Modes umfaßt, die aus einem bestimmten Zustand der Steuersignale (Sel1, WR, RD) den derzeit vorliegenden Mode erkennt.

## Claims

1. Apparatus for reducing the power consumption of a signal processor system having a signal processor (1) and a programme memory (2) which is connected to the signal processor (1) in order to supply control signals (WR, RD, Sel 1) for access to the programme memory (2), the signal processor (1) comprising a device for terminating any internal operations and for switching the signal processor (1) to an idle mode, during which the signal processor (1) does not have any data to process, characterised by an additional logic device (3) which is coupled to the signal processor (1) and the programme memory (2) and which detects the control signals (WR, RD, Sel 1), which are specified for access to the programme memory (2), and recognises therefrom the idle mode of the signal processor (1) and, when the idle mode is recognised, deactivates the programme memory (2) and, when the idle mode is terminated, re-activates the programme memory (2).

2. Apparatus according to claim 1, characterised in that a further device increases the waiting cycles for access to the programme memory (2) during the idle mode.

3. Apparatus according to claim 1 or claim 2, characterised in that the additional logic device (3) comprises a counting circuit (5) which, if the signals (Sel 1, RD, WR) of the signal processor which indicate an idle mode are present for a predetermined time, increases the count value thereof by one.

4. Apparatus according to any one of claims 1 to 3, characterised in that the additional logic device (3) further comprises a device (4) for recognising the idle mode, which device (4) recognises the currently set mode from a specific state of the control signals (Sel 1, WR, RD).

## Revendications

1. Dispositif pour abaisser la puissance consommée d'un système à processeur de signaux, comportant un processeur de signaux (1) et une mémoire de programmes (2) reliée au processeur de signaux (1) pour amener des signaux de commande (WR, RD, Sel 1) pour l'accès à la mémoire de programmes (2), le processeur de signaux (1) comprenant un dispositif pour terminer toute opération interne et pour transférer le processeur de signaux (1) en un mode à vide ("Idle-Mode") pendant la période où le processeur de signaux (1) n'a pas de données à traiter, caractérisé par une logique supplémentaire (3) qui est couplée au processeur de signaux (1) et à la mémoire de programmes et qui détecte les signaux de commande (WR, RD, Sel1) destinés à l'accès à la mémoire de programmes (2) et reconnaît à partir de ceux-ci le mode à vide du processeur de signaux (1), et qui désactive la mémoire de programmes (2) à la reconnaissance du mode à vide et la réactive lorsque le mode à vide est quitté.

2. Dispositif selon la revendication 1, caractérisé en ce qu'un autre moyen augmente les cycles d'attente pour l'accès à la mémoire de programmes (2) pendant le mode à vide.

3. Dispositif selon l'une ou l'autre des revendications 1 et 2, caractérisé en ce que la logique supplémentaire (3) comprend un circuit compteur (5) qui, lorsque les signaux (Sel1, RD, WR) du processeur de signaux indiquant un mode à vide sont présents pendant une période fixe déterminée, augmente sa valeur de comptage d'une unité.

4. Dispositif selon l'une quelconque des revendications 1 à 3, caractérisé en ce que la logique supplémentaire (3) comprend en outre un moyen (4) pour reconnaître le mode à vide, qui reconnaît le mode actuellement présent à partir d'un certain état des signaux de commande (Sel1, WR, RD).
